# EUROPEAN PATENT SPECIFICATION

(11) **EP 1 803 948 B1**
(45) Date of publication and mention of the grant of the patent: **12.06.2019**
(21) Application number: 06026506.3
(22) Date of filing: 20.12.2006
(51) Int. Cl.: F16C 33/78, B60B 27/00, F16J 15/3232, F16C 19/38

(54) **Sealing device and rolling element bearing for a wheel hub unit with such a sealing device**
Dichtungsvorrichtung und Wälzlageranordnung für ein Radlager mit einer solchen Dichtungsvorrichtung
Garniture d'étanchéité et dispositif de roulement pour un moyeu de roue avec une telle garniture d'étanchéité

(30) Priority: 27.12.2005 JP 2005374289
(43) Date of publication of application: 04.07.2007
(73) Proprietor: JTEKT Corporation, Osaka-shi Osaka 542-8502 (JP)
(72) Inventor: Takimoto, Masao, Chuo-ku, Osaka-shi,Osaka 542-8502 (JP)
(74) Representative: Hoefer & Partner Patentanwälte mbB

(56) References cited:
- EP-A- 1 731 779
- EP-A2- 0 286 150
- EP-A2- 0 286 151
- EP-A2- 0 458 123
- EP-A2- 1 128 078
- WO-A1-2005/095811
- WO-A2-2006/026950
- US-A- 4 118 080

## Description

### BACKGROUND OF THE INVENTION

The present invention relates to a rolling bearing device using a sealing device which can maintain its sealing property over a long period of time.

A sealing device for sealing a clearance between an inner ring and an outer ring of a rolling bearing device has been conventionally used on a rolling bearing device for supporting a wheel of a motor vehicle or the like to prevent the intrusion of muddy water and foreign matters into the interior of the bearing device. The sealing device like this is mounted between the inner ring and the outer ring at both ends thereof (for example, Patent Document No. 1).

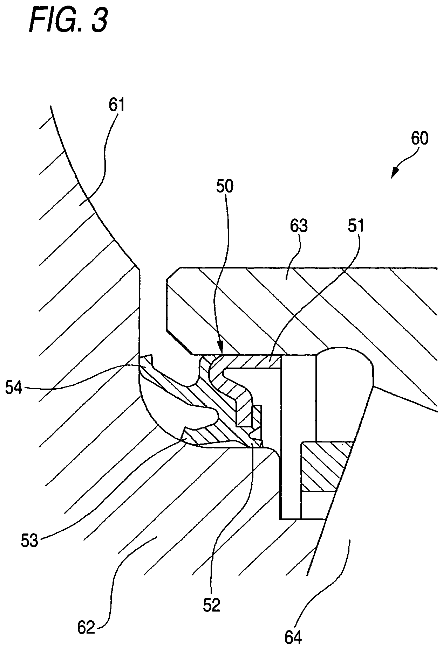

Fig. 3 is a sectional view showing a conventional sealing device which is mounted on one end side of an automotive rolling bearing device. In the figure, a rolling bearing device 60 includes an inner ring 62 as a rotating ring on which a flange portion 61 is formed to which a wheel of a motor vehicle is fixed, an outer ring 63 as a stationary ring, and tapered rollers 64 as rolling elements. A sealing device 50 mounted on the rolling bearing device 60 includes a metal core 51 which is fixedly fitted in an end portion of the outer ring 63 which faces the flange portion 61 and a plurality of seal lips 52 to 54 which are made of an elastic material and are mounted on the metal core 51 in such a manner as to be brought into sliding contact with an outer circumferential surface and the flange portion of the inner ring 62. The plurality of seal lips 52 to 54 are formed in such a manner as to extend from an outward side surface of the metal core 51 which acts as a proximal end thereof towards the outer circumferential surface and the flange portion 61 of the inner ring 62, respectively. By being brought into sliding contact with the outer circumferential surface and the flange portion 61 of the inner ring 62 which rotates as the vehicle runs, the seal lips seal a clearance between the inner and outer rings to thereby prevent the intrusion of muddy water and foreign matters into the interior of the rolling bearing device 60.

Patent Document No. 1: JP-A-2004-76784

As shown in Fig. 3, a clearance which is made to open radially outwards is formed between an end face of the outer ring 63 in which the sealing device 51 is mounted and the flange portion 61. Since this clearance opens radially outwards, in the event that muddy water and foreign matters once intrude into the interior of the bearing device, they tend to stay therein, whereby there may occur a case where the seal lips 52 to 54 are exposed to the muddy water and foreign matters excessively. Due to this, the sealing device which is fitted in the outer ring 63 on one end side thereof is in a severer condition than a sealing device which is fitted in the outer ring 63 on the other end side thereof, and depending on the running conditions of the vehicle, there has been a risk that the durability of the sealing device is decreased.

Further, when the sealing device 50 is fitted in the outer ring 63, the sealing device 50 is positioned relative to the outer ring 63 by adjusting the fit-in amount of the sealing device 50 when it is fitted in the outer ring 63 in the axial direction, and this process made difficult the installation of the sealing device 50 in the outer ring 63.

Further document WO 2005 095 811 A1 relates to a rolling bearing device according to the preamble of claim 1.

### SUMMARY OF THE INVENTION

The invention was made in view of these situations, and an object thereof is to provide a rolling bearing device including a sealing device which can maintain its sealing property over a long period of time while facilitating the installation thereof onto the rolling bearing device.

With a view to attaining the object, according to the invention, there is provided a rolling bearing device with the features of claim 1.

Since the sealing device of the rolling bearing device having the above-mentioned configuration has the shielding portion which shields the clearance between the flange portion and the end portion of the outer ring, the intrusion of muddy water and foreign matters into the clearance can be prevented. Consequently, the extreme reduction in durability of the seal lips can be prevented, and hence, the sealing property of the sealing device can be maintained over a long period of time.

Further, since the sealing device is mounted on the rolling bearing device in such a state that the circular ring portion is in abutment with the end face of the outer ring, also when the sealing device is forcibly pushed in along the axial direction for installation on the outer ring, the axial positioning of the sealing device can be ensured by only bringing the circular ring portion into abutment with the end face of the outer ring without adjusting the forcible push amount of the sealing device, whereby the installation of the sealing device can be facilitated.

Furthermore, the shielding portion is formed in such a manner as to produce a slight clearance between a distal end portion thereof which extends towards the flange portion side and the flange portion, and in this case, the shielding effect of the shielding portion can be maintained by virtue of the labyrinth effect without bringing the distal end portion into sliding contact with the flange portion. Consequently, there is caused no risk that the rotational torque of the rolling bearing device is increased due to frictional resistance generated by the sliding contact of the distal end portion thereof with the flange portion, whereby the sealing property of the sealing device 20 can be maintained.

Further, the shielding portion is preferably formed integrally with the seal lip. In this case, since the shielding portion and the seal lips can be molded at one time, the manufacturing process of the sealing device can be simplified, thereby making it possible to prevent the increase in production costs.

The rolling bearing device preferably includes sealing devices which are mounted between the inner ring and the outer ring on both end sides thereof so as to seal an interior of the bearing device.

According to the rolling element device that is configured as has been described above, since the sealing property of the sealing device can be maintained over the long period of time as has been described above, the intrusion of muddy water and foreign matters into the interior of the rolling bearing device can be prevented over the long period of time, whereby the durability of the rolling bearing device can be increased.

According to the sealing device of the rolling bearing device of the invention, the sealing property can be maintained over the long period of time while facilitating the installation onto the rolling bearing device.

According to the rolling bearing device of the invention, since the intrusion of muddy water and foreign matters into the interior of the rolling bearing device can be prevented over the long period of time by the sealing device, the durability of the rolling bearing device can be increased.

### BRIEF DESCRIPTION OF THE DRAWINGS

Fig. 1 is a sectional view showing a rolling bearing device according to an embodiment of the invention to which sealing devices are applied.
Fig. 2 is an enlarged view of one of the sealing devices of the embodiment shown in Fig. 1.
Fig. 3 is a sectional view showing a conventional sealing device.

### DETAILED DESCRIPTION OF PREFERRED EMBODIMENTS

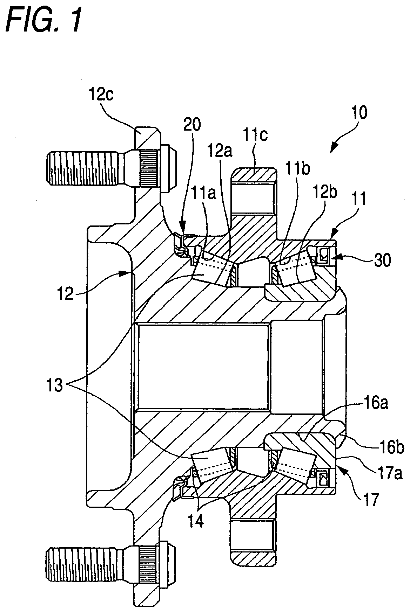

Next, a preferred embodiment of the invention will be described with reference to the accompanying drawings. Fig. 1 is a sectional view showing a rolling bearing device according to an embodiment of the invention. This rolling bearing device 10 is such as to support rotatably a wheel of a motor vehicle or the like relative to a suspension system of the motor vehicle.

The rolling bearing device 10 includes an outer ring 11, an inner shaft 12 as an inner ring, a plurality of tapered rollers 13 as rolling elements which are interposed between the outer ring '11 and the inner shaft 12, and cages 14 which hold the tapered rollers separated from each other and makes up a double-row tapered roller bearing device.

The outer ring 11 is a stationary ring which is fixed to a suspension system of a motor vehicle and has primary and secondary outer ring raceways 11a, 11b which are formed on an inner circumferential surface thereof and a mounting portion 11c which is formed on an outer circumferential surface thereof so that the outer ring 11 is mounted on a vehicle body thereat.

The inner shaft 12 constitutes a rotating ring, as well as an axle on which a wheel, not shown, is mounted and is disposed concentrically on an inner circumferential side of the outer ring 11. The inner shaft 12 has primary and secondary inner ring raceways 12a, 12b which are formed on an outer circumferential surface in such manner as to correspond to the primary and secondary outer ring raceways 11a, 11b, respectively. A flange portion 12c is formed at one end portion of the inner shaft 12 to which a wheel is fixed. This flange portion 12c is formed in such a manner as to face an end portion of the outer ring 11 in such a state that a predetermined clearance S which is made to open radially outwards is produced therebetween. The rolling bearing device 10 is fixed to the suspension system in such a manner that one end portion side where the flange portion 12c is formed lies on an outward side of the vehicle and the other end potion side lies on an inward side of the vehicle.

The plurality of tapered rollers 13 are rotatably disposed between the primary and secondary outer ring raceways 11a, 11b and the primary and secondary inner ring raceways 12a, 12b. The plurality of rolling rollers 13 are held separated from each other at predetermined intervals in a circumferential direction by the cages 14.

The inner shaft 12 is made up of a combination of an inner shaft main body 16 and a ring member 17. The inner shaft main body 16 has the primary inner ring raceway 12a which is formed on an outer circumferential surface thereof and includes the flange portion 12c at one end portion thereof. A small diameter portion 16a, which is made smaller in diameter than the inner ring raceway 12a, is formed on the other end portion of the inner shaft main body 16.

The ring member 17 is molded into an annular shape, and the secondary inner ring raceway 12b is formed on an outer circumferential surface thereof. The ring member 17 is press fitted on the small diameter portion 16a. Furthermore, an outward end face 17a of the ring member 17 is fixed relative to an axial direction of the rolling bearing device by a caulking portion 16b which is formed at the other end portion of the inner shaft main body 16, whereby the ring member 17 and the inner shaft main body 16 are integrally fixed to each other.

By the configuration that has been described above, the rolling bearing device 10 rotatably supports the inner shaft 12 to which a wheel, not shown, is fixed relative to the vehicle.

Sealing devices 20, 30 are installed between both end portions of the outer ring 11 and the inner shaft 12, respectively, for sealing an interior of the rolling bearing device 10. Of these sealing devices, the sealing device 20 which is installed on one end portion side of the outer ring 11 produces, in accordance with the invention, a clearance S between the flange portion 12c and itself.

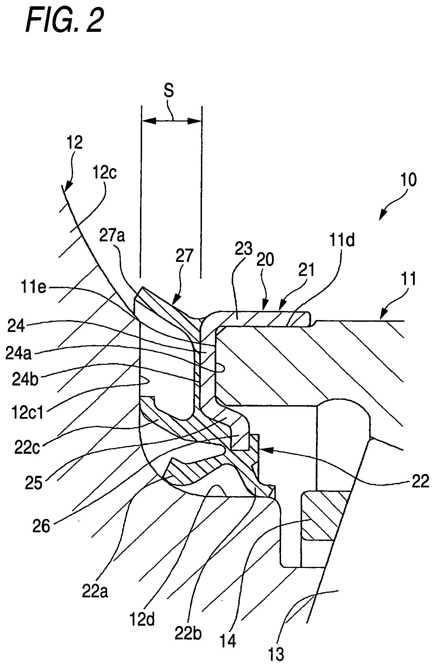

Fig. 2 is an enlarged view of the sealing device 20 shown in Fig. 1. In the figure, the sealing device 20 includes an annular metal core 21 which is fixedly fitted on the one end portion of the outer ring 11 which faces the flange portion 12c formed at the one end portion of the inner shaft 12 and seal member 22 which is mounted on the metal core 21.

The metal core 21 is formed into an annular shape having a substantially L-shaped cross section through pressing a steel plate and the like and has a cylindrical portion 23 which is fitted on an outer circumferential surface 11d of the end portion of the outer ring 11 and a circular ring portion 24 which extends radially inwards from one end portion of the cylindrical portion 23. An inward surface 24a of the circular ring portion 24 is brought into abutment with an end face 11e of the outer ring 11, and an inward edge portion 26 is formed at a radially inward end portion of the circular ring portion 24 in such a manner as to be continued therefrom via a bent portion 25 to thereby extend further radially inwards to protrude from an inner circumferential side of the outer ring 11.

The seal member 22 is such as to be formed of an elastic material such as a nitrile rubber into an annular shape and is fixed to an outward surface 24b of the circular ring portion 24 and the inward edge portion 26 by means of vulcanization bonding or the like. This seal member 22 has radial lips 22a, 22b which are brought into sliding contact with an outer circumferential surface 12d of the inner shaft 12 and an axial lip 22c which is brought into sliding contact with an end face 12c1 of the flange portion 12c. These radial lips 22a, 22b and axial lip 22c are formed in such a manner as to extend to the outer circumferential surface 12d and the end face 12cl, respectively, from the inward edge portion 26 of the metal core 21 which functions as a base end of the lips, so as to establish a seal to prevent the intrusion of muddy water and the like into the interior of the rolling bearing device 10.

The seal member 22 has a cylindrical shielding portion 27 which extends towards the flange portion 12c. This shielding portion 27 is formed integrally with the seal member 22 together with the lips 22a, 22b, 22c. The shielding member 27 is formed in such a manner as to extend towards the flange portion 12c from a radially outward end portion of the circular ring portion 24 which acts as a base end of the shielding member 27, so as to shield the clearance S defined between the flange portion 12c and the end portion of the outer ring 11.

Although the shielding portion 27 may be formed as a separate element from the seal member 22 which includes the lips 22a, 22b, 22c, the shielding portion 27 and the individual lips 22a, 22b, 22c can be formed at one time by being formed integrally as has been described above. Consequently, the manufacturing process of the sealing device 20 can be simplified, thereby making it possible to prevent an increase in production costs.

Since the sealing device 20 of this embodiment that is configured as has been described above has the shielding portion 27 which shields the clearance S defined between the flange portion 12c and the end portion of the outer ring 11, the intrusion of muddy water and foreign matters into the clearance S can be prevented. Consequently, an extreme reduction in durability of the individual seal lips can be prevented, whereby the durability of the sealing device 20 can be maintained over a long period of time.

Since the sealing device 20 of the embodiment is installed on the rolling bearing device 10 in such a state that the circular ring portion 24 is in abutment with the end face 11e of the outer ring 11, when the sealing device 20 is forcibly pushed in along the axial direction for installation on the outer ring 11, the axial positioning of the sealing device 20 can be ensured by only bringing the circular ring portion 24 into abutment with the end face 11e of the outer ring 11 without adjusting the forcible push amount of the sealing device, whereby the installation of the sealing device 20 can be facilitated.

Thus, the sealing device 20 of the embodiment can maintain its sealing property over the long period of time while facilitating the installation thereof onto the rolling bearing device 10.

When attempting to install a shielding portion 27 of the rolling bearing device of the invention on a sealing device like the conventional example described above which has a metal core that is fixedly fitted in an interior of an outer ring, because an outside diameter dimension of the metal core becomes small compared to the metal core of the embodiment which is fitted on the outer ring, there may occur a case where securing a space for installation of the shielding portion becomes difficult. However, according to the sealing device 20 of the rolling bearing device of the invention, as has been described above, by providing the cylindrical portion 23 and the circular ring portion 24 at which the metal core 21 is fixedly fitted on the outer ring 11, the area of the outward surface 24b of the metal core 21 can be increased, compared to the sealing device of the conventional example, whereby the securing of the space for installation of the shielding portion 27 is facilitated.

The sealing device 20 is installed on the outer ring 11 by being pushed in along the axial direction by pushing an outward end face of the sealing device 20 by means of a jig or the like. Because of this, in the case that in the conventional example the shielding portion is provided on a metal core having a relatively small outside diameter, a portion on the outward end face of the sealing device which can be pushed by the jig or the like is reduced, whereby there may occur a risk that it becomes difficult to install the sealing device 20 on the outer ring 11. In this embodiment, however, as has been described above, by providing the circular ring portion 24 on the metal core 21, the area of the outward surface 24b of the metal core 21 can be increased. Furthermore, since the shielding portion 27 is provided at the radially outward end portion of the circular ring portion 24 and the individual lips 22a to 22c are provided in such a manner as to extend from the inward edge portion 26 which is the base end portion of the lips and extends further radially inwards than the circular ring portion 24, a portion where no projection such as a seal lip is provided can be secured in the vicinity of the outward surface 24b. Consequently, the sealing device 20 can be pushed in by the jig or the like at the portion thereof where no projection exists, and the difficulty in installation thereof onto the outer ring 11 can be eliminated which would otherwise constitute a problem.

As has been described heretofore, with the sealing device 20 of the embodiment, since the cylindrical portion 23 and the circular ring portion 24 are provided to be fitted on the outer ring 11, not only the installation of the sealing device 20 onto the outer ring 11 can be facilitated but also the securing of the space for installation of the shielding portion 27 can be facilitated.

The shielding portion 27 is formed in such a manner as to produce a slight clearance between a distal end portion 27a thereof and the flange portion 12c. By forming the slight clearance by keeping the distal end portion 27a out of sliding contact with the flange portion 12c as has been described above, the shielding effect of the shielding portion 27 can be maintained by virtue of the labyrinth effect by the clearance so produced. Consequently, there is caused no risk that the rotational torque of the rolling bearing device 10 is increased due to frictional resistance that would otherwise be caused through the sliding contact of the distal end portion 27a with the flange 12c, whereby the sealing property of the sealing device 20 can be maintained.

According to the rolling bearing device 10, since the intrusion of muddy water and foreign matters into the interior of the rolling bearing device 10 can be prevented over the long period of time, the durability thereof can be enhanced.

The invention is not limited to the embodiment that has been described heretofore. While in the embodiment, the shielding portion 27 is formed into the cylindrical shape, there should be imposed no specific limitation on the configuration of the shielding portion 27 as long as a configuration can shield the clearance S, and for example, the clearance S may be shielded by means of a combination of a multiplicity of shielding portions which are divided in the circumferential direction.

While in the embodiment, the invention is described as being applied to the rolling bearing device which makes up the double-row tapered roller bearing device, the invention can be applied to other types of rolling bearing devices such as a double-row angular ball bearing device and the like.

## Claims

1. A rolling bearing (10) which includes an outer ring (11), an inner ring (12) having a flange portion (12c) formed at one end portion thereof, a plurality of rolling elements (13) arranged between the inner ring (12) and the outer ring (11), and a sealing device (20),
the sealing device (20) comprising:
a metal core (21) fixed to the end portion of the outer ring (11), wherein the metal core (21) includes:
a cylindrical portion (23) fitted on an outer circumferential surface (11d) of the end portion of the outer ring (11);
a circular ring portion (24) which extends radially inwards from the cylindrical portion (23) and is abutted against an end face (11e) of the end portion of the outer ring (11); and
an inward edge portion (26) which extends further radially inwards from a radially inward end portion of the circular ring portion (24) to protrude from an inner circumferential side of the outer ring (11);
an elastic seal member (22) mounted on the metal core (21) and having a radial lip (22a, 22b) extending from the inward edge portion (26) of the metal core (21) so as to be brought into sliding contact with an outer circumferential (12d) of the inner ring (12); and
an elastic shielding portion (27) mounted on a radially outward end portion of the circular ring portion (24) so as to extend towards the flange portion;
wherein a first clearance (S) is formed between an end face (12c1) of the flange portion (12c), with which an axial lip (22c) of the elastic seal member (22) is in sliding contact, and an end portion of the outer ring (11), **characterized in that** a distal end portion (27a) of the elastic shielding portion (27) extends in a direction toward the flange portion (12c) behind the end face (12c1) of the flange portion (12c), such that the elastic shielding portion (27) completely shields the first clearance (S) in radial direction and a slight second clearance is formed between a convex surface extending outwardly from an outer end portion of the end face (12c1) of the flange portion (12c) and the distal end portion (27a) of the shielding portion (27).

2. The rolling bearing device according to claim 1, wherein the shielding portion (27) is formed integrally with the seal member (22).

3. The rolling bearing device according to claim 1 wherein sealing devices (20, 30) are mounted between the inner ring (12) and the outer ring (11) on opposite sides of the bearing device so as to seal an interior of the bearing device.

## Patentansprüche

1. Wälzlager (10), das einen Außenring (11) und einen Innenring (12) mit einem Flanschabschnitt (12c), der an dessen Endabschnitt ausgebildet ist, eine Vielzahl von Wälzelementen (13), die zwischen dem Innenring (12) und dem Außenring (11) angeordnet sind, und eine Dichtvorrichtung (20) umfasst,
wobei die Dichtvorrichtung umfasst:
einen Metallkern (21), der am Endabschnitt des Außenrings (11) befestigt ist, wobei der Metallkern (21) umfasst:
einen zylindrischen Abschnitt (23), der an einer Außenumfangsfläche (11d) des Endabschnitts des Außenrings (11) angebracht ist;
einen kreisförmigen Ringabschnitt (24), der sich vom zylindrischen Abschnitt (23) radial nach innen erstreckt und an einer Endfläche (11e) des Endabschnitts des Außenrings (11) anliegt; und
einen inneren Randabschnitt (26), der sich von einem radial inneren Endabschnitt des kreisförmigen Ringabschnitts (24) zum Vorragen von einer Innenumfangsseite des Außenrings (11) weiter radial nach innen erstreckt;
ein elastisches Dichtelement (22), das am Metallkern (21) montiert ist und eine radiale Lippe (22a, 22b) aufweist, die sich vom inneren Randabschnitt (26) des Metallkerns (21) erstreckt, um mit einem Außenumfang (12d) des Innenrings (12) in Gleitkontakt gebracht zu werden; und
einen elastischen Abschirmabschnitt (27), der an einem radial äußeren Endabschnitt des kreisförmigen Ringabschnitts (24) sich in Richtung des Flanschabschnitts erstreckend montiert ist;
wobei ein erster Zwischenraum (S) zwischen einer Endfläche (12c1) des Flanschabschnitts (12c), mit der eine axiale Lippe (22c) des elastischen Dichtelements (22) in Gleitkontakt steht, und einem Endabschnitt des Außenrings (11) ausgebildet ist;
**dadurch gekennzeichnet, dass**
ein distaler Endabschnitt (27a) des elastischen Abschirmabschnitts (27) sich in Richtung zum Flanschabschnitt (12c) hinter die Endfläche (12c1) des Flanschabschnitts (12c) erstreckt, sodass der elastische Abschirmabschnitt (27) den ersten Zwischenraum (S) in radialer Richtung vollständig abschirmt, und ein geringer zweiter Zwischenraum zwischen einer konvexen Oberfläche, die sich von einem äußeren Endabschnitt der Endfläche (12c1) des Flanschabschnitts (12c) nach außen erstreckt, und dem distalen Ende (27a). des Abschirmabschnitts (27) ausgebildet ist.

2. Wälzlagervorrichtung nach Anspruch 1, wobei der Abschirmabschnitt (27) einstückig mit dem Dichtelement (22) ausgebildet ist.

3. Wälzlagervorrichtung nach Anspruch 1
wobei Dichtvorrichtungen (20, 30) zwischen dem Innenring (12) und dem Außenring (11) an gegenüberliegenden Seiten der Lagervorrichtung zum Abdichten eines Inneren der Lagervorrichtung montiert sind.

## Revendications

1. Palier à roulement (10) qui comporte une bague externe (11), une bague interne (12) ayant une partie de bride (12c) formée à une partie d'extrémité de celle-ci, une pluralité d'éléments roulants (13) agencés entre la bague interne (12) et la bague externe (11) et un dispositif d'étanchéité (20),
le dispositif d'étanchéité (20) comprenant :
un noyau métallique (21) fixé à la partie d'extrémité de la bague externe (11), où le noyau métallique (21) comporte :
une partie cylindrique (23) ajustée sur une surface circonférentielle externe (11d) de la partie d'extrémité de la bague externe (11) ;
une partie de bague circulaire (24) qui s'étend radialement vers l'intérieur à partir de la partie cylindrique (23) et vient en butée contre une face d'extrémité (11e) de la partie d'extrémité de la bague externe (11) ; et
une partie de bord intérieure (26) qui s'étend en outre radialement vers l'intérieur à partir d'une partie d'extrémité radialement intérieure de la partie de bague circulaire (24) pour faire saillie à partir d'un côté circonférentiel interne de la bague externe (11) ;
un élément d'étanchéité élastique (22) monté sur le noyau métallique (21) et ayant une lèvre radiale (22a, 22b) s'étendant à partir de la partie de bord intérieure (26) du noyau métallique (21) de manière à être amenée en contact glissant avec une surface circonférentielle externe (12d) de la bague interne (12) ; et
une partie de protection élastique (27) montée sur une partie d'extrémité radialement extérieure de la partie de bague circulaire (24) de manière à s'étendre vers la partie de bride ;
dans lequel un premier jeu (S) est formé entre une face d'extrémité (12c1) de la partie de bride (12c), avec laquelle une lèvre axiale (22c) de l'élément d'étanchéité élastique (22) est en contact glissant, et une partie d'extrémité de la bague externe (11),
**caractérisé en ce qu'**une partie d'extrémité distale (27a) de la partie de protection élastique (27) s'étend dans une direction vers la partie de bride (12c) derrière la face d'extrémité (12c1) de la partie de bride (12c), de sorte que la partie de protection élastique (27) protège complètement le premier jeu (S) dans une direction radiale et
un léger deuxième jeu est formé entre une surface convexe s'étendant vers l'extérieur à partir d'une partie d'extrémité externe de la face d'extrémité (12c1) de la partie de bride (12c) et la partie d'extrémité distale (27a) de la partie de protection (27).

2. Dispositif de palier à roulement selon la revendication 1, dans lequel la partie de protection (27) est formée d'un seul tenant avec l'élément d'étanchéité (22).

3. Dispositif de palier à roulement selon la revendication 1
dans lequel des dispositifs d'étanchéité (20, 30) sont montés entre la bague interne (12) et la bague externe (11) sur des côtés opposés du dispositif de palier de manière à assurer l'étanchéité d'un espace intérieur du dispositif de palier.
